# EUROPÄISCHE PATENTSCHRIFT

(11) **EP 2 662 957 B1**
(45) Veröffentlichungstag und Bekanntmachung des Hinweises auf die Patenterteilung: **26.01.2022**
(21) Anmeldenummer: 12007865.4
(22) Anmeldetag: 22.11.2012
(51) Int. Cl.: H02K 7/00, H02K 7/108, F16D 3/78, F02N 11/04, F02N 15/00

(54) **Anordnung umfassend einen Verbrennungsmotor**
Assembly comprising an internal combustion engine
Agencement comprenant un moteur à combustion

(30) Priorität: 22.02.2012 DE 102012003386
(43) Veröffentlichungstag der Anmeldung: 13.11.2013
(73) Patentinhaber: MAN Truck & Bus SE, 80995 München (DE)
(72) Erfinder: Lampalzer, Markus, 90537 Feucht (DE); Geissler, Josef, 86150 Augsburg (DE); Schreiner, Bernd, 81667 München (DE); Patla, Michael, 90762 Fürth (DE); Vogel, Werner, 91595 Burgoberbach (DE)
(74) Vertreter: v. Bezold & Partner Patentanwälte - PartG mbB

(56) Entgegenhaltungen:
- WO-A1-03/083287
- DE-A1-102007 048 443
- FR-A1- 2 802 592
- US-A1- 2003 151 319

## Beschreibung

Die Erfindung betrifft eine Anordnung umfassend einen Verbrennungsmotor mit Kurbelwelle. Ein mit der Kurbelwelle verbundenes Schwungrad, das über eine Kopplungsvorrichtung mit Antriebselementen gekoppelt ist, wobei zwischen dem Schwungrad und der Kopplungsvorrichtung ein Zwischenstück drehmomentübertragend angeordnet ist und ein Startergenerator innerhalb eines Schwungradgehäuses angeordnet und mit der Kurbelwelle wirkverbunden ist.

Eine derartige Anordnung geht aus DE 195 31 846 C1 hervor, hierbei handelt es sich um eine elastische Wellenkupplung an welcher ein flexibles Übertragungsmittel zwischen dem Schwungrand und einer Generatorwelle angeordnet ist.

Eine vergleichbare Anordnung geht ebenfalls aus der WO 03/083287 A1 hervor.

Die FR 2 802 592 A1 offenbart, dass eine antreibende Kurbelwelle an einem glockenförmigen Schwungrad mit hohem Trägheitsmoment befestigt ist, das den Rotor einer elektrischen Maschine trägt und über eine Reibungskupplung mit einer angetriebenen Welle verbunden ist. Das glockenförmige Schwungrad kann einteilig oder mehrteilig aufgebaut sein.

Die US 2003/0151319 A1 offenbart ein Fahrzeug mit einem Motor und einem Getriebe mit einer integrierten Starter-Generator-Anordnung zwischen dem Motor und dem Getriebe. Die ISG-Anordnung weist sowohl eine Drehmomentwandleranordnung als auch einen integrierten Starter auf. Die ISG-Anordnung ist zwischen der Drehmomentwandleranordnung und dem Getriebe montiert, wobei ein ISG-Rotor über eine Anordnung mit einer Nachgiebigkeit mit einem Laufrad gekoppelt ist, um eine ordnungsgemäße Montage und einen ordnungsgemäßen Betrieb zu ermöglichen.

Der Erfindung liegt die Aufgabe zugrunde, einen Verbrennungsmotor, der mit einem Startergenerator, vorzugsweise mit einem direkt mit der Kurbelwelle verbundenen Startergenerator ausgestattet ist, derart zu verbinden, dass die Komponenten des Antriebsstranges einfach zu montieren und kostengünstig zu fertigen sind und eine spätere Demontage der Einzelteile problemlos ermöglicht wird. Ferner ist es Aufgabe der Erfindung innerhalb eines möglichst geringen Bauraumes in dem Bereich zwischen Motor und Kopplungsvorrichtung den Startergenerator und die weiteren Verbindungselemente des Antriebsstranges derart anzuordnen, dass eine kostengünstige Fertigung der Einzelteile sowie eine einfache Montage ermöglicht wird.

Diese Aufgabe wird durch die Merkmale des Anspruches 1 sowie das Verfahren gemäß Anspruch 13 gelöst. Vorteilhafter Weiterbildungen der Erfindung ergeben sich aus den Unteransprüchen 2 bis 12 sowie 14.

Als Kern der Erfindung wird es angesehen, dass das Zwischenstück in seinem Zentrum eine Öffnung aufweist, in welcher ein Wellenkörper axial verschiebbar lagerbar ist und der Wellenkörper über ein flexibles Übertragungselement mit der Kopplungsvorrichtung verbunden ist. Dadurch, dass das auf Seiten der Kopplungsvorrichtung angeordnete flexible Übertragungselement einen zum Motor hinweisenden Wellenkörper als kraftübertragendes Bindeglied aufweist und dieser Wellenkörper linear beweglich in der Öffnung im Zentrum des Zwischenstücks gelagert ist, wird ein Zusammensetzen und/oder Zusammenfügen von der ersten Baugruppe, umfassend die Kopplungsvorrichtung, das flexible Übertragungsmittel sowie den Wellenkörper mit der zweiten Baugruppe, umfassend das Zwischenstück und das Schwungrad erst ermöglicht oder zumindest auf einfache und wirtschaftliche Weise ermöglicht. Ebenfalls ermöglicht dieser linearbewegliche Anteil im Antriebsstrang, dass eine axiale Bewegung des flexiblen Übertragungselementes ausgeglichen und gleichzeitig eine zuverlässige Drehmomentsübertragung von der Kurbelwelle über das Schwungrad auf dessen Zwischenstück und von diesem über die verdrehsichere Anbindung auf den Wellenkörper, und von dem Wellenkörper auf das flexible Übertragungselement und von diesem schließlich auf die Kopplungsvorrichtung ausführbar ist.

Als (Kurbelwellen-)Startergenerator sind hierbei elektrische Maschinen und damit Energiewandler zu verstehen, die zwischen elektrischer Energie und mechanischer Energie umwandeln können. Somit wird durch den Startergenerator sowohl die Funktion eines Starters oder Elektromotors als auch die eines Generators ausgeführt. Die Generatorfunktion kann damit als Lichtmaschinenersatz dienen, die Energie in die Fahrzeugbatterie einbringt.

Darüber hinaus ist es von Vorteil, die Lagerung des Wellenkörpers nicht direkt an dem Schwungrad vorzusehen, da die Anbindung des Wellenkörpers indirekt über das Zwischenstück eine adaptierbare Lösung für andersartige Verbindungselemente zwischen dem Schwungrad und der Kopplungsvorrichtung ermöglicht. Damit kann durch das Vorhalten eines Schwungrades durch die entsprechende Wahl unterschiedlicher Zwischenstücke bzw. Adapterelemente das Schwungrad an unterschiedliche Kopplungsvorrichtungen auf einfache Weise angeschlossen werden. Der vorliegende Erfindungsgegenstand bezieht sich auf die Anbindung eines Schwungrades an eine Kopplungsvorrichtung unter Zwischenschaltung eines flexiblen Übertragungselementes, das vorzugsweise scheibenartig und insbesondere als so genannte "Flex Plate" ausgebildet ist.

Das Zwischenstück ist vorzugsweise direkt oder indirekt mit dem Schwungrad verbunden. Eine direkte Anbindung kann einen Kontaktbereich von Zwischenstück und Schwungrad umfassen. Eine indirekte Anbindung kann dadurch gegeben sein, dass das Zwischenstück an einem Zwischenbauteil (z.B. dem Rotor des Startergenerators) und dieses wiederum mit dem Schwungrad verbunden ist wobei diese drei Teile untereinander verdrehsicher durch entsprechende Vorkehrungen (Formschluß und/oder Kraftschluß) verbunden sind.

In einer bevorzugten Ausführungsform ist das Zwischenstück scheibenartig ausgebildet und weist im Bereich der Öffnung einen Kragenbereich auf. Dieser Kragenbereich ist vorzugsweise im Endmontagezustand des Zwischenstücks zur Kurbelwelle hin ausgerichtet. Besonders bevorzugt ist die Kragenlänge zu dem Abstand der Rotationsachse zur Außenkante des Zwischenstücks wenigstens im Verhältnis von 1:1,0 bis 1:5,0, besonders bevorzugt im Verhältnis von 1:1,5 bis 1:3,0. Durch die kragenartige Ausgestaltung der Öffnung wird auf einfache Weise eine vergrößerte Kontaktfläche zwischen dem Zwischenstück und dem Wellenkörper erreicht. Die größere Kontaktfläche birgt zwei Vorteile, nämlich einerseits, dass damit eine größere Bewegung des Wellenkörpers in Achsrichtung ermöglicht wird und andererseits, dass dabei ein Kontakthalten der beiden Elemente vorliegt. Ein weiterer Vorteil ist darin zu sehen, dass durch die Vergrößerung der Berühr- bzw. Kontaktfläche der beiden Elemente das wirkende Drehmoment pro Berühr - bzw. Kontaktfläche reduziert wird und damit die Belastungen der beiden Bauteile aufgrund der zumindest temporär relativ hohen Drehmomente gesenkt werden können. Dadurch, dass sich der Kragenbereich zur Kurbelwelle hinweisend erstreckt, wird kein zusätzlicher Bauraum in Achsrichtung in Anspruch genommen.

Erfindungsgemäß ist der Wellenkörper derart formschlüssig mit der Öffnung des Zwischenstücks verbunden, dass ein Drehmoment von dem Zwischenstück von dem Wellenkörper an ein mit dem Wellenkörper befestigtes flexibles Übertragungsmittel übertragbar ist. Damit wird gewährleistet, dass trotz axialer Bewegung des Wellenkörpers aufgrund von Bewegungen des flexiblen Übertragungsmittels die Drehmomentübertragung des Zwischenstücks auf den Wellenkörper stets gewährleistet werden kann.

Zur leichteren Demontierbarkeit ist es erfindungsgemäß vorgesehen, dass das Zwischenstück am Schwungrad und/oder der Wellenkörper am flexiblen Übertragungsmittel und/oder das flexible Übertragungsmittel an der Kopplungsvorrichtung mittels Befestigungselementen lösbar befestigt ist. Hierbei ist insbesondere von Vorteil, wenn die Befestigungsmittel - z. B. Schrauben - in deren Montage/Fügerichtung derart ausgerichtet sind, dass das Befestigungsmittel mit welchem das Zwischenstück auf dem Schwungrad montiert wird mit entgegengesetzter Fügerichtung und/oder entgegengesetzt ausgerichtetem Angriffsbereich für das Ansetzen eines Werkzeugs zur Montage als das Befestigungselement mit welchem das Wellenelement auf das flexible Übertragungselement und/oder als das Befestigungselement mit welchem das flexible Übertragungselement an die Kopplungsvorrichtung montiert wird, ausgerichtet ist. Damit ergeben sich für die erste und die zweite Baugruppe unterschiedliche, vorzugsweise entgegengesetzte Füge- und/oder Montagerichtungen und/oder eine unterschiedliche, vorzugsweise entgegengesetzte Ausrichtungen der Werkzeugangriffsbereiche der jeweiligen Befestigungselemente. Damit wird ein einfaches Zusammenfügen und Vormontieren der beiden Baugruppen auf einfache und wirtschaftliche Weise unter Berücksichtigung des späteren "Zusammensteckens" des Wellenkörpers in die Öffnung des Zwischenstücks ermöglicht. Ferner kann dadurch auch der benötigte Bauraum in Achsrichtung reduziert bzw. gering gehalten werden.

Im weiteren wird vorgeschlagen, dass der Startergenerator einen Stator und einen Rotor umfasst, wobei der Stator zumindest bereichsweise an einem Gehäuse eines Schwungradgehäuses und/oder bereichsweise an einem die Kopplungsvorrichtung übergreifenden Gehäuse befestigt ist. Hierbei ist es insbesondere vorteilhaft, wenn der Rotor zumindest bereichsweise auf dem Schwungrad und/oder zumindest bereichsweise auf dem Zwischenstück befestigt ist. Damit kann der Rotor selbst entweder auf dem Schwungrad und/oder auf dem Zwischenstück befestigt sein. Es ist auch möglich, den Rotor zu einem gewissen Anteil auf dem Schwungrad abzustützen und zum weiteren Teil auf dem Zwischenstück abzustützen.

Um den Rotor auf kostengünstige Weise in seiner axialen Bewegbarkeit einzuschränken und/oder diese zu unterbinden, hat es sich als vorteilhaft erwiesen, wenn der Rotor formschlüssig durch benachbarte Bereiche des Schwungrades und des Zwischenstücks kontaktiert, z.B. "umgriffen" wird. Dadurch, dass der Rotor im Bereich der Anbindung von Zwischenstück und Schwungrad angeordnet ist, kann damit neben der drehmomentübertragenden Funktion des Zwischenstücks und der durch das Zwischenstück ermöglichten axialen Verlagerung des Wellenkörpers innerhalb der Öffnung des Zwischenstücks ferner die Funktion erfüllt werden, dass das Zwischenstück die axiale Bewegbarkeit des Rotors mit beeinflusst und/oder diese hemmt.

Im konkreteren Fall kann dies bedeuten, dass im Endmontagezustand der Rotor an wenigstens seiner Stirnseiten eine formschlüssige und/oder kraftschlüssige Verbindung mit dem Schwungrad und/oder mit dem Zwischenstück eingeht, die eine Verdrehsicherung des Rotors gewährleistet wobei der Rotor vorzugsweise eine scheiben-, prismen- und/oder zylinderartige Form aufweist. Damit kann beispielsweise der scheibenartige Rotor, der in seinem Zentrum eine Öffnung aufweist auf das Zwischenstück und/oder eine entsprechende Auskragung des Schwungrades aufgesetzt werden und durch Zusammensetzen von Schwungrad und Zwischenstück an seinen Stirnseiten eine formschlüssige und/oder kraftschlüssige Fixierung erfahren.

Gemäß einer weiteren Ausgestaltung der Erfindung ist es vorgesehen, dass der Wellenkörper an seinem im Endmontagezustand von der Kurbelwelle wegweisenden Ende einen Lagerbereich zur Aufnahme und/oder Abstützung einer Abtriebswelle und/oder Wellenbereiche der Kopplungsvorrichtung umfasst, wobei vorzugsweise die Abtriebswelle und/oder Wellenbereiche der Kopplungsvorrichtung im Lagebereich des Wellenkörpers drehbar gelagert und damit gegen radiale Bewegungen oder Kräfte abgestützt ist/sind. Dadurch, dass der Wellenkörper einen derartigen Aufnahmebereich umfasst, kann der Wellenkörper neben seiner drehmomentübertragenden Funktion zusätzlich eine stabilisierende und führende Funktion für die Kopplungsvorrichtung ausführen. Hierbei ist es von Vorteil, wenn das aufzunehmende Element sich innerhalb der Ausnehmung des flexiblen Übertragungsmittels hinein erstreckt, wobei zwischen diesem aufzunehmenden Element und dem flexiblen Übertragungsmittel Material des Wellenelementes angeordnet ist.

Das flexible Übertragungsmittel, das vorzugsweise scheiben-, prismen- und/oder zylinderartig ausgebildet ist, weist in seinem radial inneren Bereich Befestigungsmittel zur Verbindung mit dem Wellenkörper und am radial äußeren Bereich des Übertragungsmittels Befestigungsmittel zur Verbindung mit einem Kopplungsvorrichtungselement auf, wobei die radial äußeren Befestigungsmittel vorzugsweise im Endmontagezustand einen Abstand von der Drehachse des Antriebsstrangs aufweisen der dem 0,6- bis 1,6-fachen des Abstandes der Mittellinie des Startergenerators zur Drehachse des Antriebsstranges, besonders bevorzugt dem 0,85- bis 1,35-fachen dieses Abstandes entspricht. Insbesondere in diesen Abstandsbereichen kann es bei der Auslegung der Verbindungselemente der Fixierung des flexiblen Übertragungsmittel und der Kopplungsvorrichtung zu Konflikten mit einer ebenfalls in diesem Abstandsbereich angeordneten Startergeneratorbaugruppe kommen. Deshalb ist es insbesondere in diesem Fall von Vorteil, wenn die Verbindung von Schwungrad und Kopplungsvorrichtung durch die oben beschriebene Zusammensteckvariante von Wellenkörper und Zwischenstück erfolgt.

Als Startergeneratorbaugruppe ist der Stator sowie der Rotor samt deren Bestandteile und Anbauteile zu verstehen. Beispielsweise die Kabel für die Leistungs- und/oder Steuerelektronik, Steuergeräte, Wicklungen und dergleichen.

Ferner hat es sich als zweckdienlich erwiesen, dass das Zwischenstück mit zumindest einer Durchstecköffnung versehen ist, wobei die Durchstecköffnung derart angeordnet und ausgebildet ist, dass im zusammengesetzten Zustand von Schwungrad und Zwischenstück, wenigstens ein Fixierelement zum Befestigen des Schwungrades an der Kurbelwelle durch Durchführung eines Werkzeugs und/oder durch Durchführung des Fixierelementes selbst durch die Durchstecköffnung lösbar und/oder fixierbar ist. Hierzu kann vorzugsweise die Mittelachse der Durchstecköffnung koaxial und/oder achsparallel und mit einem maximalen Achsversatz von 3 cm zu der Mittelachse der Durchstrecköffnung des Schwungrades und/oder einer Mittelachse einer Fixieraufnahme an der Kurbelwelle ausgerichtet sein.

Der erfindungsgemäße Gegenstand ist insbesondere bei Antriebssträngen vorteilhaft, bei denen an einem äußeren Umfang des Schwungrades ein Zahnkranz angeordnet ist, wobei der Zahnkranz vorzugsweise über wenigstens ein Zahnrad mit einem weiteren Elektromotor/Generator, vorzugsweise einen Anlasser einer rein elektromotorischen Bauart, verbunden ist. Diese Gattung der Antriebsstränge sieht zusätzlich neben dem ersten Elektromotor/Generator (hier dem Startergenerator) einen weiteren vor, wobei der weitere Elektromotor/Generator als Anlasser für einen kalten Motor dient und der erstbeschriebene Elektromotor/Generator, also der Startergenerator, vorwiegend oder ausschließlich für Startvorgänge, die bei einem z. B. bereits warmen und damit leichtgängiger in Betrieb zu nehmenden Motor verwendet wird. Da der direkt am Schwungrad angeordnete Elektromotor/Generator (hier Startergenerator) lediglich geringe Drehmomente zum Starten des Motors aufbringen muss, kann dieser entsprechend klein dimensioniert werden und damit wiederum positiv den Volumenbedarf des Motors insbesondere im Bereich des Schwungrades und/oder der Kopplungsvorrichtung entsprechend hin zu kleinerem Volumen beeinflussen.

Ferner hat es sich als vorteilhaft erwiesen, wenn im Bereich des Startergenerators, insbesondere im Bereich (z.B. in maximal 5 cm Abstand) des Tragbereichs des Stators eine Kühleinrichtung vorgesehen ist. Diese Kühleinrichtung kann eine Flüssigkeitskühlung, vorzugsweise eine Wasserkühlung die mit dem Kühlkreislauf eines am Schwungradgehäuse angeschlossenen Motors wirkverbunden ist umfassen wobei Kühlkanäle der Kühleinrichtung durch Öffnungen des Schwungradgehäuses hindurchgeführt und/oder zumindest bereichsweise in Ausnehmungen und/oder Hohlräumen des Schwungradgehäuses integriert sind. Hierfür kann das Schwungradgehäuse außenseitig mit Anschlussstellen für den Zu- und Ablauf versehen sein und das Kühlmedium zwischen dem Zu- und Ablauf in integral in das Schwungradgehäuse eingebaute (mehr- oder einstückige) Kühlkanäle geführt werden. Dabei kann der Kühlkanal zumindest bereichsweise einstückig in das Schwungradgehäuse integriert sein und/oder zumindest bereichsweise durch einen Ausnehmungsbereich des Schwungradgehäuses und einen dichtend auf diesen Ausnehmungsbereich aufgesetztes Abdeckelement gebildet sein. Durch die Kühleinrichtung kann von dem Startergenerator erzeugte Wärme abgeführt werden um damit die Leistung im Generatorbetrieb zu erhöhen. Im Falle, dass zumindest ein Teil des Kühlkanals als separates Bauteil ausgeführt ist (beispielsweise ein Abdeckelement), ist es vorteilhaft, wenn dieses separate Bauteil durch die selbe Öffnung wie die Verkabelung des Startergenerators geführt wird, beispielsweise wird die Verkabelung und das separate Bauteil des Kühlkanals als Baugruppe an das Schwungradgehäuse verbaut. Durch die räumliche Nähe von Kühlkanal und Verkabelung kann dabei eine Kühlung und/oder Erwärmung der Verkabelung des Startergenerators auch außerhalb des engeren Bereichs um den Startergenerator realisiert werden. Alternativ oder zusätzlich zu der beschriebenen Anordnung der Kühleinrichtung und dessen Kühlkanals im Bereich des Schwungradgehäuses ist es möglich, die Kühleinrichtung und dessen Kühlkanäle zumindest bereichsweise in oder an das Gehäusemittel anzuordnen. Das Gehäusemittel ist dabei ein Gehäuse, das sich an der dem Motor abgewandten Seite des Schwungradgehäuses anschließt und zumindest Teile des Antriebsstrangs (Kupplung, Zwischenstück, Wellenkörper und/oder das Schwungrad) umgibt. Durch die räumliche Anordnung (Nähe) und/oder durch die einstückige materielle Verbindung zwischen den Kühlkanälen der Kühleinrichtung und der Anbindung des Startergenerators (bzw. dessen Lagerort) ist die beschriebene Kühleinrichtung besonders zur Abführung von Abwärme des Startergenerators (5) geeignet.

Neben der Vorrichtung betrifft der Erfindungsgedanke ein Verfahren gemäß der Ansprüche 13 und 14.

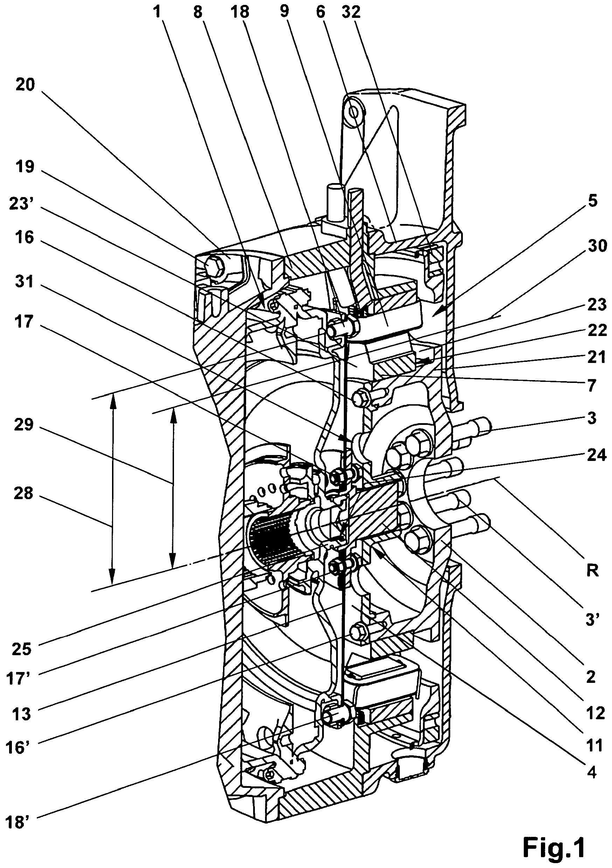

Die Erfindung ist anhand von Ausführungsbeispielen in den Zeichnungsfiguren näher erläutert. Diese zeigen
- Fig. 1: eine perspektivische Vollschnittdarstellung einer erfindungsgemäßen Ausbildung des Antriebsstrangs;
- Fig. 2: eine schematische Explosionsdarstellung der oberen Hälfte des Antriebsstrangs gemäß Figur 1 im Vollschnitt.

In den Zeichnungsfiguren ist ein Teil des Antriebsstrangs und damit eine Anordnung zur Verbindung eines Verbrennungsmotors mit seiner Kurbelwelle (nicht dargestellt) mit einer Kopplungsvorrichtung 1 dargestellt. Auf der linken Zeichnungsseite ist hierbei die Kopplungsvorrichtung 1 und auf der rechten Zeichnungsseite der Verbrennungsmotor mit seiner Kurbelwelle (nicht dargestellt) platziert. Ein Schwungrad 2 ist über Befestigungsmittel 3, 3' einerseits direkt mit der Kurbelwelle und über eine Kopplungsvorrichtung 1 mit Abtriebselementen, wie zum Beispiel eine Abtriebswelle (nicht dargestellt) gekoppelt, wobei zwischen dem Schwungrad 2 und der Kopplungsvorrichtung 1 ein Zwischenstück 4 drehmomentübertragen eingebunden ist. Ein Startergenerator 5 ist innerhalb eines Schwungradgehäuses 6 angeordnet. Der Startergenerator 5 weist einen am Schwungrad 2 befestigten Rotor 7 und einen indirekt über ein Gehäusemittel 8 am Schwungradgehäuse 6 befestigten Stator 9 auf.

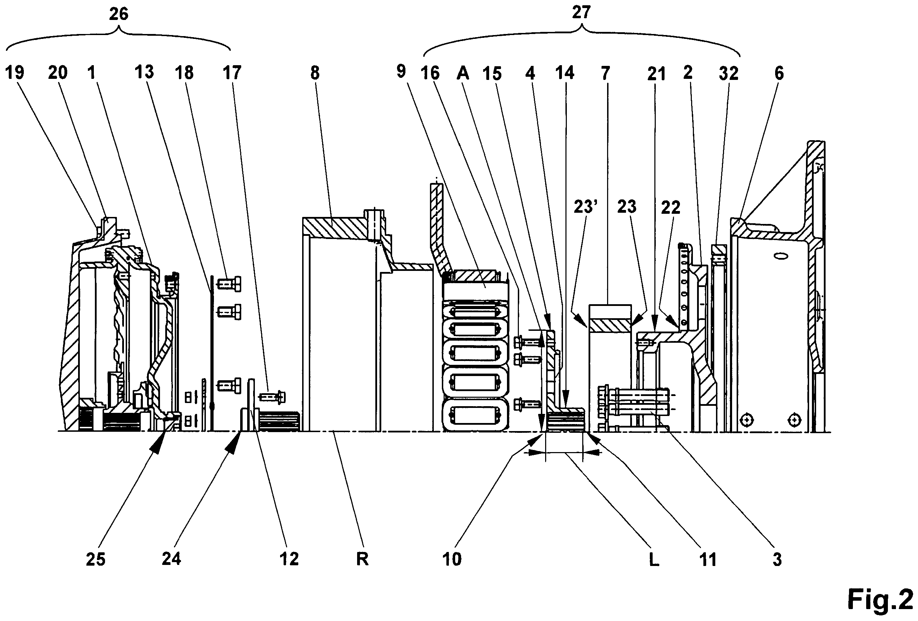

Das Zwischenstück 4 ist im Wesentlichen scheibenartig ausgebildet und weist in seinem Zentrum 10 eine Öffnung 11 auf, in welcher ein Wellenkörper 12 axial verschiebbar gelagert ist. Der Wellenkörper 12 ist über ein flexibles Übertragungselement 13 das im dargestellten Fall auch als "Flex Plate" bezeichnet werden kann, mit der Kopplungsvorrichtung 1 verbunden. Im Bereich der Öffnung 11 weist das Zwischenstück 4 einen Kragenbereich 14 auf, der im dargestellten Fall im Endmontagezustand sich zum Schwungrad 2 beziehungsweise zur Kurbelwelle hin erstreckt. Der Kragenbereich 14 umgibt hierbei zylinderartig die Öffnung 11. Die Kragenlänge L (vergleiche Figur 2) weist ein Verhältnis zu dem Abstand A der Rotationsachse R zur Außenkante 15 des Zwischenstücks 4 von 0,2:1 bis 1:1 auf. Durch eine derartige Ausgestaltung des Kragenbereichs 14 wird einerseits eine ausreichende axial verschiebbare Lagerung (Eingriff) des Wellenkörpers 12 innerhalb der Öffnung 11 des Zwischenstücks 4 gewährleistet und gleichzeitig eine nahezu vernachlässigbare Erweiterung des Antriebsstranges in Achsrichtung erfordert.

Der Wellenkörper 12 weist in seiner Oberfläche eine zahnradähnliche oder keilwellenartige Kontur auf, wobei die Zähne mit ihren auf- und absteigenden Flanken geradlinig und parallel zur Rotationsachse R verlaufen. Eine hierzu korrespondierende oder zumindest bereichsweise korrespondierende Geometrie findet sich im Inneren der Mantelfläche des Kragenbereichs 14 und somit innerhalb der Öffnung 11. Die Fläche innerhalb der Öffnung 11 und die Fläche des in diese Öffnung 11 eingreifenden Bereichs des Wellenkörpers 12 sind derart korrespondierend ausgebildet, dass die Übertragung eines Drehmomentes von dem Zwischenstück 4 auf den Wellenkörper 12 ermöglicht wird und gleichzeitig eine axiale Verlagerung des Wellenkörpers 12 relativ zu dem Zwischenstück 4 ermöglicht wird. Das auf den Wellenkörper 12 übertragene Drehmoment wird von diesem weiter an ein an diesem befestigtes Übertragungsmittel 17, 17' übertragen. Im Folgenden werden unterschiedliche Gruppen an Befestigungsmitteln 3, 3', 16, 16', 17, 17', 18, 18', 19, 19' beschrieben. Die jeweiligen Befestigungsmittel mit gleicher Nummer sind für die Befestigung zweier gleicher Elemente vorgesehen. Die Befestigung kann jedoch auch nur eine oder mehr als die zwei in den Figuren dargestellten Befestigungsmitteln umfassen. Vorzugsweise sind die Befestigungsmittel 3, 16, 17, 18, 19 jeweils lösbar befestigt. Die Nummerierung ist so gewählt, dass die Befestigungsmittel 3, 3' die Befestigung des Schwungrades an der Kurbelwelle; die Befestigungsmittel 16, 16' die Befestigung des Schwungrades mit dem Zwischenstück 4; die Befestigungsmittel 17, 17'; die Befestigung des Wellenkörpers 12 mit dem Übertragungselement 13; die Befestigungsmittel 18, 18' die Befestigung des Übertragungsmittel 13 mit der Kopplungsvorrichtung 1 sowie die Befestigungsmittel 19, 19' die Befestigung eines Wandlergehäusebereichs 20 mit einem gegebenenfalls vorhandenem Gehäusemittel 8 und dem Schwungradgehäuse 6 vollzieht.

Der Rotor 7 ist in der dargestellten Ausführungsform als Zahnkranzring gestaltet, der auf einem Tragbereich 21 des Schwungrades 2 aufgepresst ist. Der Tragbereich 21 weist hierbei einen Anschlag 22 auf, den der Rotor 7 stirnseitig berührt. An der gegenüberliegenden Stirnseite des Rotors 7 kann dadurch, dass der äußere Durchmesser des scheibenartigen Zwischenstücks 4 zumindest geringfügig größer ist, als der Innendurchmessers des scheibenringartigen Rotors 7 ein Kontakt und damit eine formschlüssige Verbindung des Zwischenstücks 4 mit dem Rotor 7 einhergehen. Damit kann eine Bewegung des Rotors 7 in axialer Richtung verhindert werden. Auch kann ein Form- und/oder Kraftschluss auf Verdrehsicherung in der Verbindung des Rotors 7 auf dem Tragbereich 21 des Schwungrades 2 gewährleistet werden, zum Beispiel via Kraftschluss bei dem oben beschriebenen Aufpressen. Zusätzlich oder alternativ zu der dargestellten Ausführungsform kann der Rotor 7 auch auf einen Tragbereich (nicht dargestellt) des Zwischenstücks 4 aufgesetzt sein. Selbstverständlich kann alternativ hierzu wiederum auch der Rotor 7 derart ausgebildet sein, dass er sowohl auf dem Schwungrad 2 also auf den Zwischenstück 4 gleichzeitig einen tragenden Bereich 22 aufweist.

Neben der im vorgehenden Absatz beschriebenen Ausführungen kann es auch vorgesehen sein, dass das Zwischenstück 4 nicht direkt mit dem Schwungrad 2 verbunden ist, so dass kein direkter Kontakt zwischen dem Zwischenstück 4 und dem Schwungrad 2 besteht. Statt dessen steht das Zwischenstück 4 im Kontakt mit dem Rotor 7 und der Rotor 7 wiederum im Kontakt mit dem Schwungrad 2. Damit wird das Zwischenstück 4 indirekt über den Rotor 7 mit dem Schwungrad 2 verdrehsicher verbunden.

Hierbei kann es in einer weiteren vorteilhaften Ausführungsform zusätzlich vorgesehen sein, dass das Befestigungsmittel 16, 16' den Rotor 7 beispielsweise durch eine Durchstecköffnung durchgreift und schließlich klemmend den Rotor 7 zwischen dem Zwischenstück 4 sowie dem Schwungrad 2 fixiert.

Alternativ oder zusätzlich kann eine Form und/oder kraftschlüssige Verbindung an der Stirnseite 23, 23' des Rotors 7 mit dem Schwungrad 2 und/oder mit dem Zwischenstück 4 bestehen.

Wie insbesondere aus Zeichnungsfigur 1 zu sehen ist, weist der Wellenkörper 12 an seinem im Endmontagezustand von der Kurbelwelle wegweisenden Ende ein Lagerbereich 24 zur Aufnahme und Abstützung eines Zapfens beziehungsweise eines Wellenbereichs 25 der Kopplungsvorrichtung 1 auf, wobei der Zapfen 25 beziehungsweise der Wellenbereich 25 der Kopplungsvorrichtung 1 im Lagerbereich 24 des Wellenkörpers 12 drehbar gelagert und damit gegen radiale Bewegungen/Kräfte abgestützt ist. In einer besonders bevorzugten Ausführungsform kann im Lagerbereich 24 des Wellenkörpers 12 eine Kugellagereinheit angeordnet sein, die eine reibarme Lagerung des Zapfens 25 und einer gleichzeitigen Abstützung des Zapfens 25 an dem Lagerbereich 24 somit an dem Wellenkörper 12 gewährleistet. Alternativ kann der Zapfen 25 auch am Wellenkörper 12 und der Lagerbereich 24 an der Kopplungsvorrichtung 1 angeordnet sein.

Um eine möglichst vorteilhafte Montage des erfindungsgemäßen Antriebsstrangs zu ermöglichen, ist es vorgesehen, dass der Wellenkörper 12, mit der Kopplungsvorrichtung 1 und dem flexiblen Übertragungsmittel 13 eine erste vormontierte Baugruppe 26 bildet, die als Einheit auf die zweite vormontierte Baugruppe (Schwungradbaugruppe 27) aufsteckbar und/oder in einer linearen Bewegung zusammenführbar und damit in zumindest einen Drehmoment übertragenen Eingriff bringbar ist. Die Schwungradbaugruppe 27 umfasst zumindest das Schwungrad 2, den Rotor 7 sowie das Zwischenstück 4. Darüber hinaus sind die Baugruppen 26, 27 jeweils mit deren Befestigungsmitteln 3, 3', 16, 16', 17, 17', 18, 18', 19, 19' versehen.

Im radial inneren Bereich des Übertragungsmittels 13 sind Befestigungselemente 17, 17' zur Verbindung mit dem Wellenkörper 12 vorgesehen und am radial äußeren Bereich des Übertragungsmittels 13 sind Befestigungselemente 18, 18' zur Verbindung mit einem Element der Kupplungsvorrichtung 1 angeordnet. Die radial äußeren Befestigungselemente 18, 18' sind hierbei im Endmontagezustand in einem Abstand 28 von der Rotationsachse R des Antriebsstranges angeordnet, der dem 0,6- bis 1,6-fachen des Abstandes 29 der Mittellinie 30 des Startergenerators 5 zur Rotationsachse R des Antriebsstranges entspricht. Die Mittellinie 30 des Startergenerators 5 ist als der gemittelte Abstand aus dem maximalen und minimalen Abstand oder Radius des Startergenerators 5 zur Rotationsachse definiert. Hierbei sind die baulichen Bestandteile Stator 9 und Rotor 7 des Startergenerators 5 in Betracht zu ziehen. Mit anderen Worten liegt das Befestigungsmittel 18, 18' in etwa auf Höhe der ringförmigen Stator-Rotor-Baugruppe des Startergenerators 5. Die Befestigungsmittel 18, 18' sind vorzugsweise als Schrauben ausgebildet wobei deren Schraubenschäfte von dem Startergenerator5 wegweisend ausgerichtet sind.

Das Zwischenstück 4 weist eine Durchstecköffnung 31 auf, die derart angeordnet und ausgebildet ist, dass im zusammengesetzten Zustand von Schwungrad 2 und Zwischenstück 4 wenigstens ein Befestigungsmittel 3, 3' durch diese Durchsteckausnehmung 31 hindurchführbar ist und an seinen zu montierenden Ort gelangen kann. Zusätzlich oder alternativ kann die Durchstecköffnung 31 derart ausgebildet und angeordnet sein, dass zumindest ein Werkzeug durch die Durchstecköffnung 31 hindurchführbar und in Eingriff mit wenigstens einem Befestigungsmittel 3, 3' bringbar ist, sodass im zusammengesetzten Zustand und damit im Endmontagezustand von Schwungrad 2 und Zwischenstück 4 durch die Durchstecköffnung 31 hindurch auf die Befestigungsmittel 3, 3' Einfluss genommen werden kann.

Ferner weist das Schwungrad 2 einen Zahnkranz 32, wobei der Zahnkranz 32 an der der Kurbelwelle zuweisenden Seite des Schwungrades 2 angeordnet ist. Der Zahnkranz 32 ist vorzugsweise mit einem Zahnrad (nicht dargestellt) in Eingriff, welches wiederum von einem weiteren Elektromotor/Generator (nicht dargestellt) antreibbar ist. Damit können neben der Drehmomentbeaufschlagung des Schwungrades durch die Kurbelwelle ferner über den Startergenerator 5 als auch über den Zahnkranz 32 und den mit diesem verbundenen Elektromotor/Generator (nicht dargestellt) Drehmomente auf das Schwungrad eingebracht werden.

Das Befestigungsmittel 16, 16' ist in der dargestellten Ausführungsform in der Nähe des Tragbereiches 21 angeordnet. Damit kann der Tragbereich 21 als Widerlager für das Befestigungsmittel 16, 16' dienen.

Ferner weist das Gehäusemittel 8 einen zur äußeren Umfangsfläche einen nach radial innen versetzten Trägerbereich auf, der sich ringartig in Richtung Kurbelwelle erstreckt und auf welchem der Stator 9 des Startergenerators 5 angeordnet ist. Dabei ist es vorteilhaft, dass der ringartige Trägerbereich des Gehäusemittels 8 in den Innenbereich des Schwungradgehäuses 6 des Schwungrades 2 einragt und/oder zumindest teilweise innerhalb dessen (im Endmontagezustand) angeordnet ist. Die Umfangsfläche des Gehäusemittels 8 liegt etwa auf Höhe des das Schwungrad 2 umgebenden Abschnittes des Schwungradgehäuses 6. Vorzugsweise schließt die Umfangsfläche in etwa bündig mit dem das Schwungrad umgebenden Bereich des Schwungradgehäuses 6 ab. Der Versatz des Trägerbereichs zu der Umfangsfläche erlaubt ein zumindest teilweises zusammensetzten von Gehäusemittel 8 und Schwungradgehäuse 6. Ein Kühlkanal (nicht dargestellt) kann im Bereich des Gehäusemittels 8 und/oder des Schwungradgehäuses 6 angeordnet sein wobei dieser Kühlkanal vorzugsweise zumindest bereichsweise einstückig mit dem Gehäusemittel 8 und/oder dem Schwungradgehäuse 6 ausgebildet ist, derart, dass wenigstens in einem Teilbereich des Kühlkanals ein Teil des Kühlkanalsquerschnitts durch eine Ausnehmung (nicht dargestellt) des Gehäusemittels 8 und/oder des Schwungradgehäuses 6 und ein weiterer Teil des Kühlkanalquerschnitts durch ein Abdeckelement (nicht dargestellt) gebildet wird.

**BEZUGSZEICHENLISTE**

| | | | |
|---|---|---|---|
| L | Kragenlänge | 21 | Tragbereich v. 2 |
| A | Abstand | 22 | Anschlag v. 21 |
| 1 | Kopplungsvorrichtung | 23, 23' | Stirnseite v. 7 |
| 2 | Schwungrad | 24 | Lagerbereich v. 12 |
| 3, 3' | Befestigungsmittel zw. 2 u. Kurbelwelle | 25 | Wellenbereich/Zapfen v. 1 |
| 4 | Zwischenstück | 26 | erste Baugruppe |
| 5 | Startergenerator | 27 | Schwungradbaugruppe |
| 6 | Schwungradgehäuses | 28 | Abstand zw. R u. 18, 18' |
| 7 | Rotor | 29 | Abstand zw. R u. 5 |
| 8 | Gehäusemittel | 30 | Mittellinie v. 30 |
| 9 | Stator | 31 | Durchstecköffnung |
| 10 | Zentrum v. 4 | 32 | Zahnkranz |
| 11 | Öffnung | | |
| 12 | Wellenkörper | | |
| 13 | Übertragungsmittel | | |
| 14 | Kragenbereich v. 4 | | |
| 15 | Außenkante v. 4 | | |
| 16, 16' | Befestigungsmittel zw. 2 u. 4 | | |
| 17, 17' | Befestigungsmittel zw. 12 u. 13 | | |
| 18, 18' | Befestigungsmittel zw. 13 u. 1 | | |
| 19, 19' | Befestigungsmittel zw. 20, 8 u. 6 | | |
| 20 | Kopplungsvorrichtungsgehäuse | | |

## Patentansprüche

1. Anordnung umfassend einen Verbrennungsmotor mit Kurbelwelle, ein mit der Kurbelwelle verbundenes Schwungrad (2), das über eine Kopplungsvorrichtung (1) mit Abtriebselementen gekoppelt ist, wobei zwischen dem Schwungrad (2) und der Kopplungsvorrichtung (1) ein Zwischenstück (4) drehmomentübertragend angeordnet ist und ein Startergenerator (5) innerhalb eines Schwungradgehäuses (6) angeordnet und mit der Kurbelwelle wirkverbunden ist, wobei das Zwischenstück (4) in seinem Zentrum (10) eine Öffnung (11) aufweist, in welcher ein Wellenkörper (12) axial verschiebbar gelagert ist und der Wellenkörper (12) über ein flexibles Übertragungsmittel (13) mit der Kopplungsvorrichtung (1) verbunden ist,
wobei der Wellenkörper (12) derart formschlüssig mit der Öffnung (11) des Zwischenstückes (4) verbunden ist, dass ein Drehmoment von dem Zwischenstück (4) über den Wellenkörper (12) an das mit dem Wellenkörper (12) befestigte flexible Übertragungsmittel (13) übertragbar ist,
wobei das Zwischenstück (4) am Schwungrad (2) durch Befestigungsmittel (16, 16') lösbar befestigt ist.

2. Anordnung nach Anspruch 1, **dadurch gekennzeichnet, dass** das Zwischenstück (4) scheibenartig ausgebildet ist und im Bereich der Öffnung (11) einen Kragenbereich (14) umfasst,
wobei sich vorzugsweise der Kragenbereich (14) im Endmontagezustand des Zwischenstückes (4) zur Kurbelwelle hin erstreckt und besonders bevorzugt die Kragenlänge L zu dem Abstand A der Rotationsachse R zur Außenkante (15) des Zwischenstücks (4) wenigstens das Verhältnis 1:1,0 bis 1:5,0, besonders bevorzugt 1:1,5 bis 1:3,0 beträgt.

3. Anordnung nach einem der vorhergehenden Ansprüche, **dadurch gekennzeichnet, dass** der Wellenkörper (12) am flexiblen Übertragungsmittel (13) und/oder das flexible Übertragungsmittel (13) an der Kopplungsvorrichtung (1) durch Befestigungsmittel (3, 3', 17, 17',18, 18', 19, 19') lösbar befestigt ist.

4. Anordnung nach einem der vorhergehenden Ansprüche, **dadurch gekennzeichnet, dass** der Startergenerator (5) einen Stator (9) und einen Rotor (7) umfasst,
wobei der Stator (9) zumindest bereichsweise an einem Schwungradgehäuses (6) und/oder zumindest bereichsweise an einem die Kopplungsvorrichtung (1) übergreifenden Gehäuse (8, 20) befestigt ist und/oder dass im Bereich des Startergenerators (5) eine Kühleinrichtung zur Abführung von Abwärme des Startergenerators (5) in oder an dem Schwungradgehäuse (6) und/oder einem die Kopplungsvorrichtung (1) übergreifenden Gehäuse (8, 20) angeordnet ist.

5. Anordnung nach Anspruch 4, **dadurch gekennzeichnet, dass** der Rotor (7) zumindest bereichsweise auf dem Schwungrad (2) und/oder zumindest bereichsweise auf dem Zwischenstück (4) befestigt ist.

6. Anordnung nach Anspruch 4 oder 5, **dadurch gekennzeichnet, dass** der Rotor (7) formschlüssig durch benachbarte Bereiche des Schwungrades (2) und des Zwischenstücks (4), zumindest in seiner axialen Bewegbarkeit eingeschränkt, vorzugsweise eine axiale Verlagerung des Rotors (7) unterbunden wird.

7. Anordnung nach Anspruch 4 oder 5, **dadurch gekennzeichnet, dass** im Endmontagezustand der Rotor (7) an wenigstens einer seiner Stirnseiten (23, 23') eine formschlüssige und/oder kraftschlüssige Verbindung mit dem Schwungrad (2) und/oder mit dem Zwischenstück (4) eingeht, die eine Verdrehsicherung des Rotors (7) gewährleist wobei der Rotor (7) vorzugsweise eine scheiben-, prismen- und/oder zylinderartige Form aufweist.

8. Anordnung nach einem der vorhergehenden Ansprüche, **dadurch gekennzeichnet, dass** der Wellenkörper (12) an seinem im Endmontagezustand von der Kurbelwelle wegweisenden Ende einen Lagerbereich (24) zur Aufnahme und/oder Abstützung einer Abtriebswelle und/oder Wellenbereiche (25) der Kopplungsvorrichtung (1) umfasst,
wobei vorzugsweise die Abtriebswelle und/oder Wellenbereiche (25) der Kopplungsvorrichtung (1) im Lagerbereich (24) des Wellenkörpers (12) drehbar gelagert und damit gegen radiale Bewegungen/Kräfte abgestützt ist.

9. Anordnung nach einem der vorhergehenden Ansprüche, **dadurch gekennzeichnet, dass** der Wellenkörper (12) mit der Kopplungsvorrichtung (1) und dem flexiblen Übertragungsmittel (13) eine vormontierte Baugruppe 26 bildet, die als Einheit auf die vormontierte mit dem Zwischenstück (4) versehene Schwungradbaugruppe (27) aufsteckbar ist.

10. Anordnung nach einem der vorhergehenden Ansprüche, **dadurch gekennzeichnet, dass** das flexible Übertragungsmittel (13) scheiben-, prismen- und/oder zylinderartig ausgebildet ist wobei in einem radial inneren Bereich des Übertragungsmittels (13), Befestigungsmittel (17, 17'), zur Verbindung mit dem Wellenkörper (12) und am radial äußeren Bereich des Übertragungsmittels (13), Befestigungselemente (18, 18') zur Verbindung mit einem Kopplungsvorrichtungselement (1) angeordnet sind und vorzugsweise die radial äußeren Befestigungselemente (18, 18') im Endmontagezustand einen Abstand (28) von der Rotationsachse R des Antriebsstrangs aufweisen der dem 0,6- bis 1,6-fachen des Abstandes (29) der Mittellinie (30) des Startergenerators zur Rotationsachse R des Antriebsstranges, besonders bevorzugt dem 0,85- bis 1,35- fachen des Abstandes (29) entspricht.

11. Anordnung nach einem der vorhergehenden Ansprüche, **dadurch gekennzeichnet, dass** das Zwischenstück (4) mit zumindest einer Durchstecköffnung (31) versehen ist wobei die Durchstecköffnung (31) derart angeordnet und ausgebildet ist, dass im zusammengesetzten Zustand von Schwungrad (2) und Zwischenstück (4), wenigstens ein Befestigungsmittel (3, 3') zum Befestigen des Schwungrades (2) an der Kurbelwelle durch Durchführung eines Werkzeugs und/oder durch Durchführung des Befestigungsmittels (3, 3') selbst durch die Durchstecköffnung (31) lösbar und/oder fixierbar ist, vorzugsweise ist die Mittelachse der Durchführöffnung (31) koaxial und/oder achsparallel und mit einem maximalen Achsversatz von 3 cm zu der Mittelachse einer Befestigungsmitteldurchführbohrung des Schwungrades (2) und/oder einer Mittelachse einer Befestigungsmittelaufnahme an der Kurbelwelle ist.

12. Anordnung nach einem der vorhergehenden Ansprüche, **dadurch gekennzeichnet, dass** an einem äußeren Umfang des Schwungrades (2) ein Zahnkranz (32) angeordnet ist, wobei der Zahnkranz (32) vorzugsweise über wenigstens ein Zahnrad mit einem weiteren Elektromotor/Generator verbunden ist.

13. Verfahren zur Montage einer Anordnung nach einem der vorhergehenden Ansprüche, wobei die Anordnung einen Verbrennungsmotor mit Kurbelwelle, ein mit der Kurbelwelle verbundenes Schwungrad (2), das über eine Kopplungsvorrichtung (1) mit Abtriebselementen gekoppelt ist, aufweist, wobei zwischen dem Schwungrad (2) und der Kopplungsvorrichtung (1) ein Zwischenstück (4) drehmomentübertragend angeordnet ist, und einen innerhalb eines Schwungradgehäuses (2) angeordneten und mit der Kurbelwelle wirkverbunden Startergenerator (5) umfasst, aufweisend
a. Bereitstellen einer ersten Baugruppe (26) bestehend aus einem an der Kopplungsvorrichtung (1) über ein flexibles Übertragungsmittel (13) verbundenen Wellenkörper (12),
b. Bereitstellen einer zweiten Baugruppe (27) bestehend aus einem an einem Schwungrad (2) montierten Zwischenstück (4), wobei das Zwischenstück (4) am Schwungrad (2) durch Befestigungsmittel (16, 16') lösbar befestigt ist und wobei das Zwischenstück (4) in seinem radial inneren Bereich eine Öffnung (11) umfasst,
c. Zusammensetzen und/oder Zusammenfügen der beiden Baugruppen (26, 27) derart, dass der Wellenkörper (12) zumindest bereichsweise in die Öffnung (11) des Zwischenstücks (4) einragt wobei
d. zumindest im Endmontagezustand der Wellenkörper (12) relativ zum Zwischenstück (4) längsverlagerbar und verdrehsicher gelagert ist.

14. Verfahren nach Anspruch 13, **dadurch gekennzeichnet, dass** die Befestigungsmittel (18, 18') zur Fixierung des flexiblen Übertragungsmittels (13) an der Kopplungsvorrichtung (1) und/oder die Befestigungsmittel (3, 3') zur Befestigung des Schwungrads (2) an der Kurbelwelle vor dem Zusammensetzten der beiden Baugruppen (26, 27) an die entsprechenden Baugruppe (26, 27) montiert werden.

## Claims

1. An arrangement comprising an internal combustion engine with a crankshaft, a flywheel (2) which is connected to the crankshaft and is coupled via a coupling device (1) to output elements, an intermediate piece (4) being arranged in a torque-transmitting manner between the flywheel (2) and the coupling device (1), and a starter generator (5) being arranged within a flywheel housing (6) and being operatively connected to the crankshaft, the intermediate piece (4) having an opening (11) in its centre (10), in which opening (11) a shaft body (12) is mounted such that it can be displaced axially, and the shaft body (12) being connected via a flexible transmission means (13) to the coupling device (1),
the shaft body (12) being connected in a positively locking manner to the opening (11) of the intermediate piece (4) in such a way that a torque can be transmitted from the intermediate piece (4) via the shaft body (12) to the flexible transmission means (13) which is fastened to the shaft body (12),
the intermediate piece (4) being fastened releasably to the flywheel (2) by way of fastening means (16, 16').

2. The arrangement according to Claim 1, **characterized in that** the intermediate piece (4) is of disc-like configuration and comprises a collar region (14) in the region of the opening (11),
the collar region (14) preferably extending towards the crankshaft in the final assembly state of the intermediate piece (4), and the ratio of the collar length L to the spacing A of the rotational axis R from the outer edge (15) of the intermediate piece (4) particularly preferably being at least from 1:1.0 to 1:5.0, particularly preferably from 1:1.5 to 1:3.0.

3. The arrangement according to either of the preceding claims, **characterized in that** the shaft body (12) is fastened releasably to the flexible transmission means (13) and/or the flexible transmission means (13) is fastened releasably to the coupling device (1) by way of fastening means (3, 3', 17, 17', 18, 18', 19, 19').

4. The arrangement according to one of the preceding claims, **characterized in that** the starter generator (5) comprises a stator (9) and a rotor (7),
the stator (9) being fastened at least in regions to a flywheel housing (6) and/or at least in regions to a housing (8, 20) which engages over the coupling device (1),
and/or **in that** a cooling device for dissipating waste heat of the starter generator (5) is arranged in the region of the starter generator (5) in or on the flywheel housing (6) and/or in or on a housing (8, 20) which engages over the coupling device (1).

5. The arrangement according to Claim 4, **characterized in that** the rotor (7) is fastened at least in regions on the flywheel (2) and/or at least in regions on the intermediate piece (4).

6. The arrangement according to Claim 4 or 5, **characterized in that** the rotor (7) is restricted at least in terms of its axial movability in a positively locking manner by way of adjacent regions of the flywheel (2) and of the intermediate piece (4), and an axial movement of the rotor (7) is preferably prevented.

7. The arrangement according to Claim 4 or 5, **characterized in that**, in the final assembly state, the rotor (7) enters on at least one of its end sides (23, 23') into a positively locking and/or non-positive connection to the flywheel (2) and/or to the intermediate piece (4), which connection ensures an anti-rotation safeguard of the rotor (7), the rotor (7) preferably having a disc-like, prism-like and/or cylindrical shape.

8. The arrangement according to one of the preceding claims, **characterized in that**, at its end which points away from the crankshaft in the final assembly state, the shaft body (12) comprises a bearing region (24) for receiving and/or supporting an output shaft and/or shaft regions (25) of the coupling device (1),
the output shaft and/or shaft regions (25) of the coupling device (1) preferably being mounted rotatably in the bearing region (24) of the shaft body (12) and therefore being supported against radial movements/forces.

9. The arrangement according to one of the preceding claims, **characterized in that** the shaft body (12) forms a preassembled module 26 with the coupling device (1) and the flexible transmission means (13), which preassembled module 26 can be plugged as one unit onto the preassembled flywheel module (27) which is provided with the intermediate piece (4).

10. The arrangement according to one of the preceding claims, **characterized in that** the flexible transmission means (13) is of disc-like, prism-like and/or cylindrical configuration, fastening means (17, 17') for connection to the shaft body (12) being arranged in a radially inner region of the transmission means (13), and fastening elements (18, 18') for connection to a coupling device element (1) being arranged on the radially outer region of the transmission means (13), and the radially outer fastening elements (18, 18') preferably being at a spacing (28) from the rotational axis R of the drive train in the final assembly state, which spacing (28) corresponds to from 0.6 to 1.6 times the spacing (29) of the centre line (30) of the starter generator from the rotational axis R of the drive train, particularly preferably corresponds to from 0.85 to 1.35 times the spacing (29).

11. The arrangement according to one of the preceding claims, **characterized in that** the intermediate piece (4) is provided with at least one plug-through opening (31), the plug-through opening (31) being arranged and configured in such a way that, in the assembled state of the flywheel (2) and the intermediate piece (4), at least one fastening means (3, 3') for fastening the flywheel (2) to the crankshaft can be released and/or fixed by way of a tool and/or the fastening means (3, 3') itself being guided through the plug-through opening (31), and the centre axis of the leadthrough opening (31) is preferably coaxial and/or axially parallel and with a maximum axial offset of 3 cm with respect to the centre axis of a fastening means leadthrough bore of the flywheel (2) and/or a centre axis of a fastening means receptacle on the crankshaft.

12. The arrangement according to one of the preceding claims, **characterized in that** a toothed rim (32) is arranged on an outer circumference of the flywheel (2), the toothed rim (32) preferably being connected via at least one gearwheel to a further electric motor/generator.

13. A method for the assembly of an arrangement according to one of the preceding claims, the arrangement having an internal combustion engine with a crankshaft, a flywheel (2) which is connected to the crankshaft and is coupled via a coupling device (1) to output elements, an intermediate piece (4) being arranged in a torque-transmitting manner between the flywheel (2) and the coupling device (1), and comprising a starter generator (5) which is arranged within a flywheel housing (2) and is operatively connected to the crankshaft, comprising:
a. providing of a first module (26) consisting of a shaft body (12) which is connected to the coupling device (1) via a flexible transmission means (13),
b. providing of a second module (27) consisting of an intermediate piece (4) which is mounted on a flywheel (2), the intermediate piece (4) being fastened releasably to the flywheel (2) by way of fastening means (16, 16'), and the intermediate piece (4) comprising an opening (11) in its radially inner region,
c. assembling and/or joining together of the two modules (26, 27) in such a way that the shaft body (12) protrudes at least in regions into the opening (11) of the intermediate piece (4),
d. the shaft body (12) being mounted, at least in the final assembly state, such that it is secured against rotation and can be moved longitudinally relative to the intermediate piece (4).

14. The method according to Claim 13, **characterized in that** the fastening means (18, 18') for fixing the flexible transmission means (13) to the coupling device (1) and/or the fastening means (3, 3') for fastening the flywheel (2) to the crankshaft are mounted on the corresponding module (26, 27) before the assembly of the two modules (26, 27).

## Revendications

1. Agencement comprenant un moteur à combustion interne doté d'un vilebrequin, un volant d'inertie (2) relié au vilebrequin, lequel volant d'inertie est accouplé à des éléments de sortie par le biais d'un dispositif d'accouplement (1), une pièce intermédiaire (4) étant disposée entre le volant d'inertie (2) et le dispositif d'accouplement (1) de manière à transmettre un couple et un générateur de démarrage (5) étant disposé à l'intérieur d'un carter de volant d'inertie (6) et étant relié fonctionnellement au vilebrequin, la pièce intermédiaire (4) comportant une ouverture (11) dans son centre (10), dans laquelle un corps d'arbre (12) est monté axialement mobile et le corps d'arbre (12) étant relié au dispositif d'accouplement (1) par le biais d'un moyen de transmission souple (13),
le corps d'arbre (12) étant relié par complémentarité de forme à l'ouverture (11) de la pièce intermédiaire (4), de telle sorte qu'un couple peut être transmis à partir de la pièce intermédiaire (4), par le biais du corps d'arbre (12), au moyen de transmission souple (13) fixé au corps d'arbre (12), la pièce intermédiaire (4) étant fixée de manière amovible au volant inertie (2) par des moyens de fixation (16, 16').

2. Agencement selon la revendication 1, **caractérisé en ce que** la pièce intermédiaire (4) est réalisée en forme de disque et comprend une région de collerette (14) dans la région de l'ouverture (11),
la région de collerette (14), dans l'état de montage final de la pièce intermédiaire (4), s'étendant de préférence vers le vilebrequin et de manière particulièrement préférée de la longueur de collerette L par rapport à la distance A de l'axe de rotation R au bord extérieur (15) de la pièce intermédiaire (4) étant au moins le rapport 1:1,0 à 1:5,0 de manière particulièrement préférée 1:1,5 à 1:3,0.

3. Agencement selon l'une des revendications précédentes, **caractérisé en ce que** le corps d'arbre (12) est fixé de manière détachable au moyen de transmission souple (13) et/ou le moyen de transmission souple (13) est fixé de manière détachable au dispositif d'accouplement (1) par des moyens de fixation (3, 3', 17, 17', 18, 18', 19, 19').

4. Agencement selon l'une des revendications précédentes, **caractérisé en ce que** le générateur de démarrage (5) comprend un stator (9) et un rotor (7), le stator (9) étant fixé, au moins dans certaines régions, à un carter de volant d'inertie (6) et/ou, au moins dans certaines régions, à un carter (8, 20) recouvrant le dispositif d'accouplement (1) et/ou **en ce que**, dans la région du générateur de démarrage (5), un dispositif de refroidissement servant à la dissipation de chaleur perdue du générateur de démarrage (5) est disposé dans ou sur le carter de volant d'inertie (6) et/ou un carter (8, 20) recouvrant le dispositif d'accouplement (1).

5. Agencement selon la revendication 4, **caractérisé en ce que** le rotor (7) est fixé, au moins dans certaines régions, sur le volant d'inertie (2) et/ou, au moins dans certaines régions, sur la pièce intermédiaire (4).

6. Agencement selon la revendication 4 ou 5, **caractérisé en ce qu'**au moins la mobilité axiale du rotor (7) est limitée par complémentarité de formes par des régions adjacentes du volant d'inertie (2) et de la pièce intermédiaire (4), de préférence un déplacement axial du rotor (7) est empêché.

7. Agencement selon la revendication 4 ou 5, **caractérisé en ce que**, dans l'état de montage final, le rotor (7) réalise une liaison par complémentarité de formes et/ou à force avec le volant d'inertie (2) et/ou avec la pièce intermédiaire (4) au niveau d'au moins l'un de ses côtés frontaux (23, 23'), laquelle liaison garantit une fixation anti-rotation du rotor (7), le rotor (7) présentant de préférence une forme de type disque, prisme et/ou cylindre.

8. Agencement selon l'une des revendications précédentes, **caractérisé en ce que** le corps d'arbre (12) comprend, à son extrémité détournée du vilebrequin dans l'état de montage final, une région de palier (24) pour le logement et/ou le support d'un arbre de sortie et/ou de régions d'arbre (25) du dispositif d'accouplement (1), l'arbre de sortie et/ou les régions d'arbre (25) du dispositif d'accouplement (1) étant de préférence montés à rotation dans la région de palier (24) du corps d'arbre (12) et par conséquent supportés vis-à-vis de mouvements radiaux/forces radiales.

9. Agencement selon l'une des revendications précédentes, **caractérisé en ce que** le corps d'arbre (12) forme avec le dispositif d'accouplement (1) et le moyen de transmission souple (13) un module (26) prémonté qui peut être enfiché en tant qu'unité sur le module de volant d'inertie (27) prémonté doté de la pièce intermédiaire (4) .

10. Agencement selon l'une des revendications précédentes, **caractérisé en ce que** le moyen de transmission souple (13) se présente sous forme de disque, de prisme et/ou de cylindre, des moyens de fixation (17, 17') servant à la liaison avec le corps d'arbre (12) étant disposés dans une région radialement intérieure du moyen de transmission (13) et des éléments de fixation (18, 18') servant à la liaison avec un élément de dispositif d'accouplement (1) étant disposés sur la région radialement extérieure du moyen de transmission (13) et de préférence les éléments de fixation (18, 18') radialement extérieurs présentant, dans l'état de montage final, une distance (28) à l'axe de rotation R de la chaîne cinématique, laquelle distance correspond à 0,6 à 1,6 fois la distance (29) de la ligne médiane (30) du générateur de démarrage par rapport à l'axe de rotation R de la chaîne cinématique, de manière particulièrement préférée à 0,85 à 1,35 fois la distance (29).

11. Agencement selon l'une des revendications précédentes, **caractérisé en ce que** la pièce intermédiaire (4) est dotée d'au moins une ouverture traversante (31), l'ouverture traversante (31) étant disposée et réalisée de telle sorte que, dans l'état assemblé du volant d'inertie (2) et de la pièce intermédiaire (4), au moins un moyen de fixation (3, 3') servant à la fixation du volant d'inertie (2) au vilebrequin peut être détaché et/ou peut être assujetti par le passage d'un outil et/ou par le passage du moyen de fixation (3, 3') lui-même à travers l'ouverture traversante (31), et de préférence la ligne médiane de l'ouverture de passage (31) étant coaxiale et/ou axialement parallèle et présentant un décalage axial maximal de 3 cm par rapport à l'axe médian d'un alésage de passage de moyen de fixation du volant d'inertie (2) et/ou à un axe médian d'un logement de moyen de fixation sur le vilebrequin.

12. Agencement selon l'une des revendications précédentes, **caractérisé en ce qu'**une couronne dentée (32) est disposée au niveau d'une périphérie extérieure du volant d'inertie (2), la couronne dentée (32) étant reliée de préférence par le biais d'au moins une roue dentée à un autre moteur électrique/générateur.

13. Procédé de montage d'un agencement selon l'une des revendications précédentes, l'agencement comportant un moteur à combustion interne doté d'un vilebrequin, un volant d'inertie (2) relié au vilebrequin, lequel volant d'inertie est accouplé à des éléments de sortie par le biais d'un dispositif d'accouplement (1), une pièce intermédiaire (4) étant disposée entre le volant d'inertie (2) et le dispositif d'accouplement (1) de manière à transmettre un couple, et comprenant un générateur de démarrage (5) disposé à l'intérieur d'un carter de volant d'inertie (2) et relié fonctionnellement au vilebrequin, comportant
a. la fourniture d'un premier module (26) constitué d'un corps d'arbre (12) relié au dispositif d'accouplement (1) par le biais d'un moyen de transmission souple (13),
b. la fourniture d'un deuxième module (27) constitué d'une pièce intermédiaire (4) montée sur un volant d'inertie (2), la pièce intermédiaire (4) étant fixée de manière détachable au volant d'inertie (2) par des moyens de fixation (16, 16') et la pièce intermédiaire (4) comprenant une ouverture (11) dans sa région radialement intérieure,
c. jonction et/ou assemblage des deux modules (26, 27) de telle sorte que le corps d'arbre (12) fasse saillie, au moins dans certaines régions, dans l'ouverture (11) de la pièce intermédiaire (4),
d. le corps d'arbre (12) étant monté de manière mobile longitudinalement et bloquée en rotation par rapport à la pièce intermédiaire (4) au moins dans l'état de montage final.

14. Procédé selon la revendication 13, **caractérisé en ce que** les moyens de fixation (18, 18') servant à l'assujettissement du moyen de transmission souple (13) sur le dispositif d'accouplement (1) et/ou les moyens de fixation (3, 3') servant à la fixation du volant d'inertie (2) au vilebrequin sont montés sur le module (26, 27) correspondant avant l'assemblage des deux modules (26, 27) .
